# EUROPÄISCHE PATENTSCHRIFT

(11) **EP 1 048 437 B1**
(45) Veröffentlichungstag und Bekanntmachung des Hinweises auf die Patenterteilung: **16.06.2004**
(21) Anmeldenummer: 00108508.3
(22) Anmeldetag: 19.04.2000
(51) Int. Cl.: B29C 51/04, B29C 51/46, B29C 51/42

(54) **Verfahren zum Erwärmen eines Streckhelfers**
Method for heating a plug
Procédé de chauffage d'un poinçon

(30) Priorität: 27.04.1999 DE 19919038
(43) Veröffentlichungstag der Anmeldung: 02.11.2000
(73) Patentinhaber: Illig, Adolf Maschinenbau GmbH & Co., 74081 Heilbronn (DE)
(72) Erfinder: Karbach, Helmut, 74172 Neckarsulm (DE)

(56) Entgegenhaltungen:
- EP-A- 0 577 384
- WO-A-99/65663
- DE-B- 1 169 113
- DE-C- 4 418 064
- FR-A- 1 290 625

## Beschreibung

Die Erfindung betrifft ein Verfahren zum Erwärmen eines Streckhelfers in einer Vorrichtung zum Verformen einer erwärmten Folienbahn aus thermoplastischem Kunststoff nach der Gattung des Hauptanspruches.

Beim Anfahren einer Vorrichtung zum Verformen einer Folienbahn aus thermoplastischem Kunststoff zu Behältern mittels Differenzdruck und mechanischer Vorstreckung weisen die Streckhelfer Raumtemperatur auf. Sie treffen bei der mechanischen Vorstreckung der Folie auf diese, die in der Regel eine Verformungstemperatur im Bereich von 120 bis 170° C aufweist. Die Folge ist eine Abschreckung der Folie im Berührungsbereich, was Schreckmarken und eine ungleichmäßige Verformung zur Folge hat. So verformte Teile sind in der Regel Ausschuss.

Auch kommt es häufig vor, dass die Abschreckung durch den kalten Streckhelfer so stark ist, dass sich die Folienbahn nicht mehr ausreichend verstrecken lässt und durchstoßen wird. Dies führt zu Störungen umfangreicher Art, die oft das Abstellen der Vorrichtung bedingen. Die durchstoßene Folienbahn kann sich hinter dem Streckhelfer einhaken, so dass das Foliengitter durch den aufwärts fahrenden Streckhelfer nach oben gerissen wird. Oder die ausgestanzten und nicht ausgeformten Teile verbleiben im Formwerkzeug, weil sie nicht ordnungsgemäß ausgestoßen werden können.

Nach einer Betriebsunterbrechung, z. B. nach einer Störung bzw. nach einer Pause, befindet sich die abgekühlte Folienbahn bereits in der Transporteinrichtung bis zu einer Mühle oder Aufwickeleinrichtung. Beim Anfahren der Vorrichtung wird die sich unter der Heizeinrichtung befindliche Folienbahn intermittierend erwärmt. Befinden sich z. B. 6 Nutzen unter der Heizung, ist nach dem ersten Transportschritt ein Abschnitt der Folienbahn in der Formstation, der nur ein Sechstel der erforderlichen Heizzeit beheizt wurde. Erst nach dem sechsten Takt ist ein vollständig erwärmter Nutzen in der Formstation. Sollte die Vorrichtung mit einer vorgeschalteten Vorheizeinrichtung kombiniert sein, sind noch wesentlich mehr Nutzen ohne Verformung durch die Vorrichtung zu transportieren, bis sich auf Verformungstemperatur befindliche Folienbahn in der Formstation befindet. Während all diesen Takten erfolgt in bekannter Weise keine Abwärtsbewegung der Streckhelfer, weil diese auf zu kalte Folie treffen würden und ggf. ein Durchstoßen der Folie erfolgen würde. Die Streckhelfer bleiben in dieser Anfahrphase unbetätigt und damit kalt.

Aus der FR-A-1 290 625 ist eine Vorrichtung bekannt, bei der der Hub der Streckhelfer durch einstellbare Anschläge veränderbar ist,. Der Sinn dieser Einstellbarkeit liegt darin, den Hub den unterschiedlichen Größen von Behältern, die nach Tausch des Formwerkzeuges mit der Vorrichtung gefertigt werden können sowie der Art des Aufbaues des Differenzdruckes anpassen zu können. Nach einer Hubveränderung bleibt der Hub konstant bis zu einer neuen Einstellung. Es ist nicht vorgesehen, den Hub pro Takt oder nach wenigen Takten zu verändern um die Streckhelfer auf diese Weise zu beheizen. Der Aufbau des Differenzdruckes während dieser Zeit unterbleibt nicht.

Aus der EP 0 170 691 B1, der für den Gegenstand des Anspruchs 1 als nächtliegender Stand der Technik angesehen wird, ist es bekannt, die Streckhelfer zu beheizen. Dies erfordert jedoch pro Streckhelfer Heizelemente, Temperaturfühler und Regeleinrichtungen, was bei kleineren Streckhelfern Platzprobleme mit sich bringt und generell sehr teuer ist. Moderne Hochleistungsvorrichtungen haben pro Nutzen Kavitätszahlen bis 96, was allein 96 Temperaturregler, Temperaturfühler und Heizelemente bedingen würde. Der nicht ohne weiteres erkennbare Ausfall eines dieser Elemente würde in einer Kavität zumindest zeitweise nicht erkennbare Ausschussteile produzieren.

Der Erfindung liegt die Aufgabe zugrunde, das Verfahren zum Beheizen der Streckhelfer beim Anfahren der Vorrichtung bzw. nach einer Betriebsunterbrechung so vorzunehmen, dass es äußerst kostengünstig ein Erwärmen aller Streckhelfer eines Nutzens ermöglicht, das störungsunanfällig ist. Ausschussteile, die beim Anfahren entstehen, sollten problemlos ohne aufwendiges Handling einer Mühle oder Aufwickeleinrichtung zugeführt werden können.

Zur Lösung der Aufgabe werden die Merkmale des Hauptanspruches vorgeschlagen. Dadurch, dass die Streckhelfer beim Anfahren der Vorrichtung mit der Folienbahn in Berührung gebracht werden, erfolgt eine Erwärmung der Streckhelfer, ohne die Folie zu durchreißen, so dass der teilweise verformte Bereich der Folienbahn mit der Folienbahn verbunden, also unausgestanzt, einer Mühle oder Aufwickeleinrichtung zugeführt werden kann.

Ein Ausführungsbeispiel der Erfindung ist nachfolgend anhand der schematischen Zeichnung näher beschrieben. Es zeigen:
- Figur 1:: einen Längsschnitt durch die Vorrichtung zur Durchführung des Verfahrens.
- Figur 2 und 3: eine taktweise verformte Folienbahn.

In einem Gestell 1 sind die wesentlichen Teile der Vorrichtung untergebracht, eine Rollenaufnahme 2 steht eingangsseitig und entfällt, wenn die zu verformende Folienbahn 3 direkt von einem Extruder zugeführt wird. Auch die Heizeinrichtung 4 ist bei Extruderverkettung eventuell nicht erforderlich. Eine intermittierend betriebene Transporteinrichtung 5 führt die Folienbahn 3 zu einer Formstation 6, in der mittels Druckluft oder Vakuum Behälter 9 geformt werden. Nach dem Absenken und ggf. Schwenken des Formtisches 7 werden die Behälter 9 in Stapelrinnen 8 ausgestoßen oder in entsprechende Nachfolgeaggregate übergeben.

Das Oberteil 10 des Formwerkzeuges sitzt an einem Obertisch 12, an dem auch eine Antriebseinrichtung 13 für mechanisch wirkende Streckhelfer 14 sitzt. Auf dem höhenbeweglichen und ggf. schwenkbaren Formtisch 7 ist das Unterteil 15 des Formwerkzeuges angeordnet, das die formgebenden Teile des Formwerkzeuges trägt.

Die Antriebseinrichtung 13 für die Hubbewegung der Streckhelfer 14 ist so ausgebildet, dass sie entweder einen variablen vorgebbaren Hub ausführen kann, z. B. in dem sie über einen Servomotor 16 oder einen hydraulischen Zylinder mit Wegmeßsystem ausgestattet ist. Oder sie ist so ausgebildet, dass sie mit einer variablen, vorgebbaren Kraft nach unten bewegt werden kann , die geringer ist als die Kraft, die sie während des Betriebes der Vorrichtung aufbringt. Dies ist z. B. möglich bei einer pneumatisch betriebenen Antriebseinrichtung 13, bei der der Druck im Pneumatikzylinder über einen Druckregler veränderbar ist.

Beim Anfahren der Vorrichtung nach einem Rollenwechsel läuft das Verfahren zum Beheizen der Streckhelfers 14 wie folgt ab:

Die Folienbahn 3 wird in die Transporteinrichtung 5 eingeführt und von dieser intermittierend der Heizung und dann der Formstation 6 zugeführt, und zwar in einem festgelegten, dem Verfahrensablauf während der Produktion entsprechenden Rhythmus. Wenn sich der Anfang der Folienbahn 3 in der Formstation 6 befindet, wird das Formwerkzeug geschlossen und die Streckhelfer 14 werden soweit von der Antriebseinrichtung 13 abgesenkt, bis die Unterseite der Streckelfer 14 die warme Folienbahn 3 berührt. Eine Zufuhr von Druckluft, die zur Endverformung der Behälter eingesetzt wird, unterbleibt. Die Verweilzeit in dieser Position wird vorzugsweise so eingestellt, dass die Aufwärtsbewegung der Streckhelfer 14 erst kurz vor dem nächsten Transportschritt bei geöffnetem Formwerkzeug erfolgt, also so lange wie möglich beibehalten. Ein Stanzhub bei einer kombinierten Form-/Stanzstation 6 ist in dieser Anfahrphase abgeschaltet.

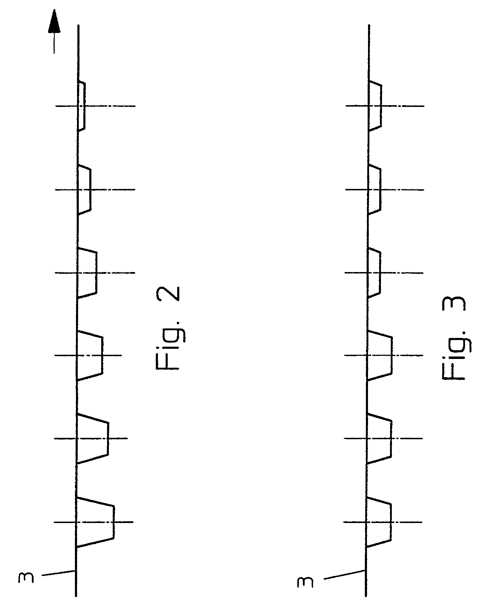

Nach dem nächsten Vorschubschritt der Folienbahn 3 und dem Schließen des Formwerkzeuges erfolgt ein Absenken der Streckhelfer 14 um denselben oder um einen Hub, der etwas größer ist als der letzte Hub, weil die Streckhelfer 14 bereits eine gewisse Erwärmung vom davor liegenden Zyklus aufgenommen haben und die Folienbahn 3 nicht mehr ganz so stark abkühlen wie beim letzten Hub, so dass sich die Folienbahn 3 weiter verformen lässt ohne Gefahr des Durchreißens. Pro Takt oder nach einigen Takten wird der Hub der Streckhelfer 14 vorzugsweise etwas erhöht, um eine besonders gute Erwärmung der Streckhelfer 14 zu erzielen. Nach 6 Takten und taktweiser Huberhöhung entsteht in der Folienbahn 3 ein Verformungsmuster, wie es in Figur 2 dargestellt ist. Figur 3 zeigt eine Folienbahn 3, wie sie bei einer Hubveränderung nach 3 Takten und nach insgesamt 6 Takten aussieht.

Nach einer festgelegten bzw. ermittelten Anzahl solcher Anfahrtakte haben die Streckhelfer 14 eine Temperatur erreicht, die eine mechanische Verstreckung der Folienbahn 3 mit guter Qualität erzielt. Dann wird beim nächsten Takt die Formluft zugeschaltet und bei formendem und stanzendem Werkzeug der Stanzhub ebenfalls zugeschaltet. Es werden so nur noch qualitativ gute Behälter 9 ausgestanzt und den Stapelrinnen 8 zugeführt.

Gemäß einer Weiterbildung der Erfindung wird vorgeschlagen, in mindestens einem Streckhelfer 14 einen Temperaturfühler 17 vorzusehen und über diesen die Temperatur des Streckhelfers 14 zu erfassen, die repräsentativ ist für die Temperatur aller Streckhelfer 14. Sollte während der Anfahrphase - z.B. nach einer kurzen Betriebsunterbrechung -, die Temperatur zu hoch werden gegenüber einer vorgegebenen Temperatur, könnten in der Produktion Probleme auftreten. Es wird in diesem Fall die Hubbewegung der Streckhelfer 14 abgeschaltet, bis die Temperatur wieder eine tiefere Temperatur erreicht hat bzw. bis zum Produktionsbeginn.

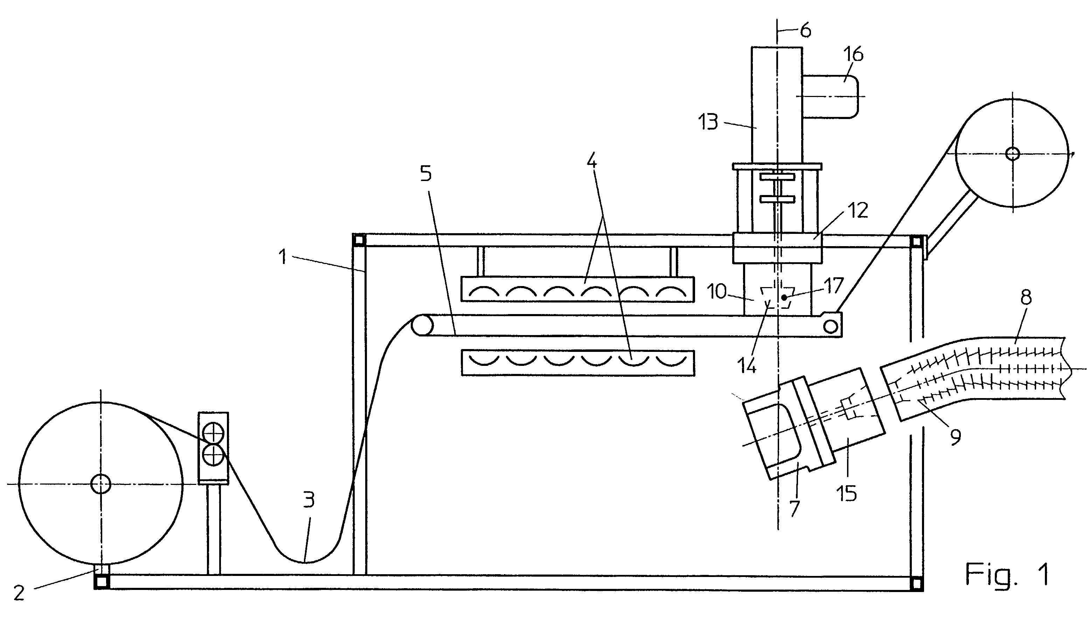

Das erfindungsgemäße Verfahren kann angewandt werden bei einer kombiniert formenden und stanzenden Formstation 6 gemäß Figur 1, wobei die Vorrichtung so ausgebildet ist, dass der Stanzhub zu- bzw. abgeschaltet werden kann. Dies ist z.B. dadurch möglich, dass der Stanzhub unabhängig ist vom Tischhub durch Anheben des Tisches über eine eigene Stanzeinrichtung bzw. durch eine Einrichtung zum Bewegen des Obertisches 12 um den Stanzhub. Das Verfahren kann aber auch angewandt werden bei einer Vorrichtung mit getrennter Form- und Stanzstation, wobei es bei solchen Vorrichtungen prinzipiell möglich ist, die Stanzstation separat zu- bzw. abschalten zu können.

Wenn die Antriebseinrichtung 13 einen pneumatischen Antrieb mit veränderbarem Luftdruck aufweist, ergibt sich die Tiefe der während des Anfahrens verformten Folienbahn von alleine aufgrund des vorgegebenen Luftdruckes. Zum Beispiel kann man den Pneumatikzylinder mit einem Druck von 1 bar betreiben, so dass die Streckhelfer 14 die Folienbahn 3 berühren und nur soweit verformen, wie es sich bei diesem Druck aufgrund der Temperatur der Folienbahn ergibt. Man kann den Druck bei allen Anfahrtakten konstant lassen oder verändern aufgrund der vorliegenden Parameter und erprobter Werte.

## Patentansprüche

1. Verfahren zum Erwärmen der Streckhelfer (14) in einer Vorrichtung zum Verformen einer erwärmten Folienbahn (3) aus thermoplastischem Kunststoff mittels Differenzdruck und mechanischer Vorstreckung beim Anfahren der Vorrichtung bzw. nach einer Betriebsunterbrechung, bei dem die Folienbahn schrittweise einer Formstation zugeführt wird, **dadurch gekennzeichnet, dass** die Erwärmung der Streckhelfer (14) durch Absenken der Streckhelfer (14) auf die Folienbahn (3) mit einem gegenüber der Produktion reduzierten Hub bzw. mit einer gegenüber der Produktion reduzierten Kraft erfolgt und der Aufbau des Differenzdruckes während dieser Zeit unterbleibt.

2. Verfahren nach Anspruch 1, wobei der Hub der Streckhelfer (14) veränderbar ist.

3. Verfahren nach Anspruch 1, wobei die Kraft zum Absenken der Streckhelfer (14) veränderbar ist.

4. Verfahren nach Anspruch 2 oder 3, wobei die Veränderung des Hubes bzw. der Kraft pro Takt erfolgt.

5. Verfahren nach Anspruch 2 oder 3, wobei die Veränderung des Hubes bzw. der Kraft nach mehreren Takten erfolgt.

6. Verfahren nach einem der Ansprüche 1 bis 5, wobei die Temperatur eines Streckhelfers (14) über einen Sensor (17) gemessen wird und das Absenken der Streckhelfer (14) bei Erreichen eines vorgegebenen Temperaturwertes unterbleibt und bei Überschreiten des Temperaturwertes wieder aufgenommen wird.

## Claims

1. Method of heating the stretching aid (14) in a device for deforming a heated film strip (3) of thermoplastic plastics material by means of differential pressure and mechanical prestretching during start-up of the device or after an operating interruption, in which the film strip is fed in steps to a shaping station, **characterised in that** the heating of the stretching aid (14) is carried out by lowering the stretching aid (14) onto the film strip (3) with a stroke reduced relative to production or with a force reduced relative to production and suppressing build-up of the differential pressure during this time.

2. Method according to claim 1, wherein the stroke of the stretching aid (14) is variable.

3. Method according to claim 1, wherein the force for lowering the stretching aid (14) is variable.

4. Method according to claim 2 or 3, wherein the variation of the stroke or the force is carried out per cycle.

5. Method according to claim 2 or 3, wherein the variation of the stroke or the force is carried out after several cycles.

6. Method according to one of claims 1 to 5, wherein the temperature of a stretching aid (14) is measured by way of a sensor (17) and lowering of the stretching aid (14) is stopped in the case of attainment of a predetermined temperature value and is resumed on exceeding of the temperature value.

## Revendications

1. Procédé pour chauffer des organes d'assistance à l'étirage (14) dans un dispositif servant à réaliser le formage d'une bande (3) chauffée, constituée d'une feuille en matière plastique, par différence de pression et préétirage mécanique effectués au démarrage du dispositif ou après un arrêt de fonctionnement, la bande étant amenée pas à pas à un poste de formage,
**caractérisé en ce que**
l'échauffement des organes d'assistance à l'étirage (14) s'effectue en abaissant ceux-ci sur la bande (3) avec une course ou une force réduites par rapport à la course et à la force en production, la différence de pression étant interrompue pendant ce temps.

2. Procédé selon la revendication 1,
**caractérisé en ce que**
la course des organes d'assistance à l'étirage (14) est variable.

3. Procédé selon la revendication 1,
**caractérisé en ce que**
la force d'abaissement des organes d'assistance à l'étirage (14) est variable.

4. Procédé selon la revendication 2 ou 3,
**caractérisé en ce que**
la variation de la course ou de la force a lieu en cadence.

5. Procédé selon la revendication 2 ou 3,
**caractérisé en ce que**
la variation de la course ou de la force a lieu après plusieurs périodes de la cadence.

6. Procédé selon l'une des revendications 1 à 5,
**caractérisé en ce que**
la température d'un organe d'assistance à l'étirage (14) est mesurée par un capteur (17) et l'abaissement des organes (14) est interrompu quand une température prédéfinie est atteinte et on reprend de nouveau l'abaissement quand la température repasse sous la valeur prédéfinie.
